# EUROPEAN PATENT APPLICATION

(11) **EP 4 576 591 A1**
(43) Date of publication of application: **25.06.2025**
(21) Application number: 23864458.7
(22) Date of filing: 30.06.2023
(51) Int. Cl.: H04B 1/40

(54) **TERMINAL DEVICE**

(30) Priority: 16.09.2022 CN 202211128050
(71) Applicant: Huawei Technologies Co., Ltd., Shenzhen, Guangdong 518129 (CN)
(72) Inventor: HU, Jianyue, Shenzhen, Guangdong 518129 (CN); OU, Songlin, Shenzhen, Guangdong 518129 (CN); HUANG, Xin, Shenzhen, Guangdong 518129 (CN)
(74) Representative: Gill Jennings & Every LLP
(86) International application number: PCT/CN2023/105283
(87) International publication number: WO 2024/055721

(57) **Abstract**

This application provides a terminal device, and relates to the field of communication technologies. Based on a plurality of existing receivers, a satellite communication function module and a wireless communication function module are integrated on a same chip, to improve signal receiving sensitivity of satellite communication. The terminal device includes a plurality of receivers, and each receiver includes an antenna, a first radio frequency front-end circuit, a second radio frequency front-end circuit, and a first radio frequency receive circuit. The terminal device further includes a satellite communication baseband circuit and a wireless communication baseband circuit. The first radio frequency receive circuit receives a first radio frequency signal sent by the antenna through the first radio frequency front-end circuit, processes the first radio frequency signal into a first baseband signal, and sends the first baseband signal to the same satellite communication baseband circuit. Alternatively, the first radio frequency receive circuit receives a second radio frequency signal sent by the antenna through the second radio frequency front-end circuit, processes the second radio frequency signal into a second baseband signal, and sends the second baseband signal to the same wireless communication baseband circuit.

## Description

This application claims priority to Chinese Patent Application No. 202211128050.9, filed with the China National Intellectual Property Administration on September 16, 2022 and entitled "TERMINAL DEVICE", which is incorporated herein by reference in its entirety.

### TECHNICAL FIELD

This application relates to the field of communication technologies, and in particular, to a terminal device.

### BACKGROUND

At present, satellite communication is gradually integrated with wireless communication, to implement expansion and transformation of satellite communication services, such as short messages, pictures, and voices to a mass consumer market. For example, a satellite communication function module is widely integrated into a terminal device, to provide a user with a comprehensive all-scenario communication capability including a cellular communication technology, a wireless network communication technology (wireless fidelity, Wi-Fi), Bluetooth (Bluetooth, BT), a BeiDou short message communication technology, and the like.

There is a high requirement for signal receiving sensitivity of satellite communication. For example, *General Specification for BeiDou Navigation Satellite System Location Report and Short Message Terminal* states that sensitivity of receiving a BeiDou satellite communication signal by a BeiDou communication terminal is not greater than -124 decibel-milliwatt (dBm) when an information error rate of the BeiDou communication terminal is less than 1×10-5. In addition, currently, the satellite communication function module is integrated into the terminal device in a form of an independent chip, and is not on a same chip as a cellular, Wi-Fi, or BT function module. Consequently, the terminal device has low product integration, and high board-level costs. Therefore, improving signal receiving sensitivity of satellite communication and improving integration of a satellite communication function module and another wireless communication function module are current core requirements.

### SUMMARY

This application provides a terminal device. Based on a plurality of existing receivers, not only a satellite communication function module and a wireless communication function module may be integrated on a same chip, but also signal receiving sensitivity of satellite communication and signal stability in a satellite communication loop may be improved.

According to a first aspect, this application provides a terminal device. The terminal device includes a plurality of receivers, and each receiver includes an antenna, a first radio frequency front-end circuit, a second radio frequency front-end circuit, and a first radio frequency receive circuit. The terminal device further includes a satellite communication baseband circuit and a wireless communication baseband circuit. The first radio frequency receive circuit is configured to: receive a first radio frequency signal sent by the antenna through the first radio frequency front-end circuit, process the first radio frequency signal into a first baseband signal, and send the first baseband signal to the same satellite communication baseband circuit. Alternatively, the first radio frequency receive circuit is configured to: receive a second radio frequency signal sent by the antenna through the second radio frequency front-end circuit, process the second radio frequency signal into a second baseband signal, and send the second baseband signal to the same wireless communication baseband circuit. The wireless communication baseband circuit includes at least one of a Wi-Fi baseband circuit, a Bluetooth baseband circuit, and a cellular baseband circuit.

In this application, a downlink S frequency band of satellite communication is close to a downlink frequency band of wireless communication, and the received radio frequency signals are similar in feature, so that the first radio frequency signal used to form a satellite communication baseband signal and the second radio frequency signal used to form a wireless communication baseband signal may share the same first radio frequency receive circuit. In other words, an input end of the first radio frequency receive circuit is electrically connected to the first radio frequency front-end circuit or the second radio frequency front-end circuit, to receive the first radio frequency signal sent by the first radio frequency front-end circuit or the second radio frequency signal sent by the second radio frequency front-end circuit. In this way, a satellite communication function module and a wireless communication function module are deeply coupled and integrated on a same chip, to improve product integration of the terminal device, reduce board-level costs by reducing board-level cabling, and further avoid low integration of the chip due to independence of the satellite communication function module and the wireless communication function module from each other.

For example, the first radio frequency receive circuit may include a first frequency mixer, a built-in filter, a built-in low noise amplifier, a built-in variable gain amplifier, an analog-to-digital conversion circuit, and the like. When the antenna is electrically connected to the first radio frequency receive circuit through the first radio frequency front-end circuit, after receiving the first radio frequency signal, the first radio frequency receive circuit may further amplify the first radio frequency signal through the built-in low noise amplifier, so that signal strength of the amplified first radio frequency signal better meets signal strength for satellite communication. Alternatively, the first frequency mixer may be used to perform frequency mixing on the first radio frequency signal and a first local oscillator signal provided by a first local oscillator circuit, to obtain a baseband signal. A frequency of the first local oscillator signal corresponds to a frequency band for satellite communication. Alternatively, the built-in filter may be used to filter the baseband signal obtained by performing frequency mixing through the first frequency mixer, so that a frequency band of the baseband signal better meets a frequency band for satellite communication, and out-of-band interference is filtered out. Alternatively, the built-in variable gain amplifier may be used to control a gain of the baseband signal, to prevent a signal saturation phenomenon of the baseband signal. Then, a baseband signal in an analog signal form is converted into a digital signal through the analog-to-digital conversion circuit, to obtain a first baseband signal, and the first baseband signal is sent to the satellite communication baseband circuit.

For another example, when the antenna is electrically connected to the first radio frequency receive circuit through the second radio frequency front-end circuit, after receiving the second radio frequency signal, the first radio frequency receive circuit may further amplify the second radio frequency signal through the built-in low noise amplifier, so that signal strength of the amplified second radio frequency signal better meets signal strength for wireless communication. Alternatively, the first frequency mixer may be used to perform frequency mixing on the second radio frequency signal and a first local oscillator signal provided by a first local oscillator circuit, to obtain a baseband signal. A frequency of the first local oscillator signal corresponds to a frequency band for wireless communication. Alternatively, the built-in filter may be used to filter the baseband signal obtained by performing frequency mixing through the first frequency mixer, so that a frequency band of the baseband signal better meets a frequency band for wireless communication, and out-of-band interference is filtered out. Alternatively, the built-in variable gain amplifier may be used to control a gain of the baseband signal, to prevent a signal saturation phenomenon of the baseband signal. Then, a baseband signal in an analog signal form is converted into a digital signal through the analog-to-digital conversion circuit, to obtain a second baseband signal, and the second baseband signal is sent to the wireless communication baseband circuit.

In the related technology, to improve a signal transmission rate, a wireless communication signal is usually transmitted by using multiple-in multiple-out in a wireless communication system. That is, wireless communication is performed by using a plurality of receivers and a plurality of transmitters. In this application, the first radio frequency front-end circuit is added based on antennas of the plurality of existing receivers, the second radio frequency front-end circuit, and the first radio frequency receive circuit, so that satellite communication and wireless communication are implemented in a time division manner. In this way, radio frequency signals for satellite communication are received through a plurality of antennas, to improve signal receiving sensitivity of satellite communication and signal stability in a satellite communication loop, further improve integration of satellite communication and wireless communication function modules and reduce a layout area and board-level costs by reducing board-level cabling. It should be noted herein that a quantity of receivers is not limited in this embodiment of this application.

Based on the foregoing description, in this application, the satellite communication baseband circuit and the wireless communication baseband circuit may be further integrated with the first radio frequency receive circuit on a same chip, to further improve product integration of the terminal device and reduce board-level costs by reducing board-level cabling.

In some possible implementations, the terminal device further includes a first selector switch and a second selector switch. The antenna is electrically connected to the first radio frequency front-end circuit or the second radio frequency front-end circuit through the first selector switch, to send a radio frequency signal to the first radio frequency front-end circuit or the second radio frequency front-end circuit.

The first radio frequency receive circuit is electrically connected to the satellite communication baseband circuit or the wireless communication baseband circuit through the second selector switch. When the antenna is electrically connected to the first radio frequency receive circuit through the first radio frequency front-end circuit, the first radio frequency receive circuit is electrically connected to the satellite communication baseband circuit through the second selector switch, so that the first radio frequency receive circuit sends the first baseband signal to the satellite communication baseband circuit. When the antenna is electrically connected to the first radio frequency receive circuit through the second radio frequency front-end circuit, the first radio frequency receive circuit is electrically connected to the wireless communication baseband circuit through the second selector switch, so that the first radio frequency receive circuit sends the second baseband signal to the wireless communication baseband circuit.

In some possible implementations, the receiver further includes a second radio frequency receive circuit. When the first radio frequency receive circuit receives the first radio frequency signal, the second radio frequency receive circuit is configured to: receive the second radio frequency signal sent by the second radio frequency front-end circuit, process the second radio frequency signal into the second baseband signal, and send the second baseband signal to the same wireless communication baseband circuit. When the first radio frequency receive circuit receives the second radio frequency signal, the second radio frequency receive circuit is configured to: receive the first radio frequency signal sent by the first radio frequency front-end circuit, process the first radio frequency signal into the first baseband signal, and send the first baseband signal to the same satellite communication baseband circuit.

In this case, for the terminal device, there may be the following two cases. In a first case, the first radio frequency receive circuit receives the first radio frequency signal sent by the antenna through the first radio frequency front-end circuit, processes the first radio frequency signal into the first baseband signal, and sends the first baseband signal to the same satellite communication baseband circuit. The second radio frequency receive circuit receives the second radio frequency signal sent by the second radio frequency front-end circuit, processes the second radio frequency signal into the second baseband signal, and sends the second baseband signal to the same wireless communication baseband circuit. In this way, satellite communication and wireless communication are performed simultaneously.

In a second case, the first radio frequency receive circuit receives the second radio frequency signal sent by the antenna through the second radio frequency front-end circuit, processes the second radio frequency signal into the second baseband signal, and sends the second baseband signal to the same wireless communication baseband circuit. The second radio frequency receive circuit receives the first radio frequency signal sent by the first radio frequency front-end circuit, processes the first radio frequency signal into the first baseband signal, and sends the first baseband signal to the same satellite communication baseband circuit. In this way, satellite communication and wireless communication are performed simultaneously.

In some possible implementations, the wireless communication baseband circuit includes a first wireless communication baseband circuit and a second wireless communication baseband circuit, and the terminal device further includes a plurality of selection circuits. The selection circuit is electrically connected between each of the first radio frequency receive circuit and the second radio frequency receive circuit of each receiver and all of the satellite communication baseband circuit, the first wireless communication baseband circuit, and the second wireless communication baseband circuit. The first radio frequency receive circuit or the second radio frequency receive circuit is further configured to: process the second radio frequency signal into the second baseband signal or a third baseband signal when receiving the second radio frequency signal.

The selection circuit is configured to: receive the first baseband signal and the second baseband signal, or the first baseband signal and the third baseband signal, or the second baseband signal and the third baseband signal that are sent by the first radio frequency receive circuit and the second radio frequency receive circuit; and send the first baseband signal to the same satellite communication baseband circuit and send the second baseband signal to the same first wireless communication baseband circuit, or send the first baseband signal to the same satellite communication baseband circuit and send the third baseband signal to the same second wireless communication baseband circuit, or send the second baseband signal to the same first wireless communication baseband circuit and send the third baseband signal to the same second wireless communication baseband circuit.

Because both a frequency band range of Wi-Fi (for example, 2.4 G Wi-Fi) communication and a frequency band range of BT communication are 2400 MHz to 2483.5 MHz, the first radio frequency receive circuit and the second radio frequency receive circuit may share the second radio frequency signal output by the second radio frequency front-end circuit. In this way, the first radio frequency receive circuit and the second radio frequency receive circuit are integrated on a same chip, to improve product integration of the terminal device and reduce board-level costs by reducing board-level cabling.

In view of this, the terminal device may include three working states. In a first working state, wireless communication of one type and satellite communication are performed simultaneously. In a second working state, wireless communication of another type and satellite communication are performed simultaneously. In a third working state, two different types of wireless communication are performed simultaneously, for example, BT communication and Wi-Fi communication.

In the first working state, the first radio frequency receive circuit receives the first radio frequency signal, and processes the first radio frequency signal into the first baseband signal, so that the first radio frequency receive circuit may be controlled to send the first baseband signal to the satellite communication baseband circuit through the selection circuit. The second radio frequency receive circuit receives the second radio frequency signal, and processes the second radio frequency signal into the second baseband signal, so that the second radio frequency receive circuit may be controlled to send the second baseband signal to the first wireless communication baseband circuit through the selection circuit. In addition, providing of an enable signal for the second wireless communication baseband circuit may be further stopped, so that the second wireless communication baseband circuit suspends working.

In the second working state, the first radio frequency receive circuit receives the first radio frequency signal, and processes the first radio frequency signal into the first baseband signal, so that the first radio frequency receive circuit may be controlled to send the first baseband signal to the satellite communication baseband circuit through the selection circuit. The second radio frequency receive circuit receives the second radio frequency signal, and processes the second radio frequency signal into the third baseband signal, so that the second radio frequency receive circuit may be controlled to send the third baseband signal to the second wireless communication baseband circuit through the selection circuit. In addition, providing of an enable signal for the first wireless communication baseband circuit may be further stopped, so that the first wireless communication baseband circuit suspends working.

In the third working state, the first radio frequency receive circuit receives the second radio frequency signal, and processes the second radio frequency signal into the second baseband signal, so that the first radio frequency receive circuit may be controlled to send the second baseband signal to the first wireless communication baseband circuit through the selection circuit. The second radio frequency receive circuit receives the second radio frequency signal, and processes the second radio frequency signal into the third baseband signal, so that the second radio frequency receive circuit may be controlled to send the third baseband signal to the second wireless communication baseband circuit through the selection circuit. In addition, providing of an enable signal for the satellite communication baseband circuit may be further stopped, so that the satellite communication baseband circuit suspends working.

In some possible implementations, the terminal device further includes a combiner, and the antenna is electrically connected to the first radio frequency front-end circuit and the second radio frequency front-end circuit. The first radio frequency front-end circuit and the second radio frequency front-end circuit are electrically connected to the first radio frequency receive circuit and the second radio frequency receive circuit through the combiner. In this way, both the first radio frequency front-end circuit and the second radio frequency front-end circuit may receive radio frequency signals sent through the antenna. In addition, the first radio frequency receive circuit and the second radio frequency receive circuit may receive, through the combiner, the first radio frequency signal and the second radio frequency signal that are sent by the first radio frequency front-end circuit and the second radio frequency front-end circuit.

In some possible implementations, due to a delay problem of a plurality of first baseband signals, phase deviation exists in the plurality of first baseband signals that are input to the same satellite communication baseband circuit. For example, because distances between a plurality of antennas and satellites are different, the plurality of antennas cannot receive radio frequency signals at the same time, resulting in delays of the plurality of first baseband signals; clock synchronization precision of a plurality of first radio frequency receive circuits is not high, resulting in delays of the plurality of first baseband signals; and because process parameters and the like of a filter or an analog-to-digital conversion circuit in the plurality of first radio frequency receive circuits may be different, a delay fluctuation exists, resulting in delays of the plurality of first baseband signals.

In view of this, the satellite communication baseband circuit includes a delay error calculation circuit, and the terminal device further includes a signal synchronization circuit. The delay error calculation circuit is configured to: calculate a delay error between a plurality of received first baseband signals, and send the delay error to the signal synchronization circuit. The signal synchronization circuit is configured to perform synchronous calibration on the first radio frequency receive circuit based on the delay error.

Specifically, the delay error calculation circuit may receive a plurality of first baseband signals sent by a plurality of first radio frequency receive circuits, use a first baseband signal sent by one of the first radio frequency receive circuits as a reference baseband signal, calculate a delay error between another first baseband signal and the reference baseband signal based on a cross-correlation fitting algorithm, and send each delay error to the signal synchronization circuit. Then, in response to the delay error, the signal synchronization circuit performs compensation on a first radio frequency receive circuit other than the radio frequency receive circuit transmitting the reference baseband signal, to perform signal synchronous calibration on the plurality of first baseband signals. Precision of the delay error calculated based on the cross-correlation fitting algorithm may reach 0.1 nanosecond.

In some possible implementations, a specific compensated component in the first radio frequency receive circuit is not limited in this application. For example, the signal synchronization circuit may be electrically connected to the analog-to-digital conversion circuit in the first radio frequency receive circuit, so that synchronous calibration on the plurality of first baseband signals is implemented in the analog-to-digital conversion circuit in the first radio frequency receive circuit. In this manner, nanosecond-level compensation may be implemented through a gate circuit, so that the plurality of first baseband signals are accurately synchronized. For another example, the signal synchronization circuit may be electrically connected to the first frequency mixer in the first radio frequency receive circuit, so that synchronous calibration on the plurality of first baseband signals is implemented in the first frequency mixer.

In the foregoing examples, synchronous calibration is performed on the plurality of first baseband signals in the radio frequency part. In addition, synchronous calibration may be further performed on the plurality of first baseband signals in the satellite communication baseband circuit. In comparison with synchronous calibration performed on the plurality of first baseband signals in the radio frequency part, performing synchronous calibration on the plurality of first baseband signals in the satellite communication baseband circuit may not need an extra external circuit.

In some possible implementations, the first baseband signal includes a plurality of first sub-baseband signals received from a plurality of satellites. The satellite communication baseband circuit is configured to: determine carrier-to-noise ratios of the plurality of received first sub-baseband signals; obtain, through comparison, a carrier-to-noise ratio difference between the first sub-baseband signals output by different receivers; determine, based on the carrier-to-noise ratio difference, weights of the first sub-baseband signals output by each receiver; and combine, based on the weights, the first sub-baseband signals corresponding to the same satellite into a combined baseband signal. The satellite communication baseband circuit is further configured to continue to transmit the combined baseband signal.

For example, the terminal device includes two receivers. An antenna of a 1^{st} receiver receives radio frequency signals from a satellite A and a satellite B for satellite communication. A first baseband signal output by the 1^{st} receiver includes a first sub-baseband signal corresponding to the satellite A and a first sub-baseband signal corresponding to the satellite B. An antenna of a 2^{nd} receiver also receives the radio frequency signals from the satellite A and the satellite B for satellite communication. A first baseband signal output by the 2^{nd} receiver includes a first sub-baseband signal corresponding to the satellite A and a first sub-baseband signal corresponding to the satellite B. The satellite communication baseband circuit may determine carrier-to-noise ratios of the four received first sub-baseband signals.

Then, carrier-to-noise ratios of the two first sub-baseband signals output by the 1^{st} receiver are compared with carrier-to-noise ratios of the two second sub-baseband signals output by the 2^{nd} receiver. If the carrier-to-noise ratios of the two first sub-baseband signals output by the 1^{st} receiver are the same as the carrier-to-noise ratios of the two second sub-baseband signals output by the 2^{nd} receiver, weights of the first sub-baseband signals output by the two receivers are the same. If a difference between the carrier-to-noise ratios of the two first sub-baseband signals output by the 1^{st} receiver and the carrier-to-noise ratios of the two second sub-baseband signals output by the 2^{nd} receiver is greater than 10 dB, a weight ratio of the two first sub-baseband signals output by the 1^{st} receiver to the two second sub-baseband signals output by the 2^{nd} receiver may be 9:1. In this way, a higher carrier-to-noise ratio gain may be stably obtained. For example, when there are two antennas, a carrier-to-noise ratio gain of 2 dB to 3 dB may be stably obtained.

In some possible implementations, the first radio frequency receive circuit, the second radio frequency receive circuit, the first radio frequency receive circuit, the satellite communication baseband circuit, and the wireless communication baseband circuit are all integrated on a same chip, to further improve product integration of the terminal device and reduce board-level costs by reducing board-level cabling.

### BRIEF DESCRIPTION OF DRAWINGS

FIG. 1 is an interaction diagram of satellite communication according to an embodiment of this application;
FIG. 2a is a connection diagram of satellite communication modules and a connection diagram of wireless communication modules according to the related technology;
FIG. 2b is another connection diagram of satellite communication modules and another connection diagram of wireless communication modules according to the related technology;
FIG. 3a is a circuit diagram of a terminal device according to an embodiment of this application;
FIG. 3b is another circuit diagram of a terminal device according to an embodiment of this application;
FIG. 3c is still another circuit diagram of a terminal device according to an embodiment of this application;
FIG. 3d is still another circuit diagram of a terminal device according to an embodiment of this application;
FIG. 4a is still another circuit diagram of a terminal device according to an embodiment of this application;
FIG. 4b is still another circuit diagram of a terminal device according to an embodiment of this application;
FIG. 5a is still another circuit diagram of a terminal device according to an embodiment of this application;
FIG. 5b is still another circuit diagram of a terminal device according to an embodiment of this application; and
FIG. 6 is a flowchart of stably transmitting a first baseband signal by a satellite baseband circuit according to an embodiment of this application.

### Reference numerals:

10: antenna; 21: first radio frequency front-end circuit; 22: second radio frequency front-end circuit; 31: first radio frequency receive circuit; 32: second radio frequency receive circuit; 40: satellite communication baseband circuit; 41: wireless communication baseband circuit; 411: first wireless communication baseband circuit; 412: second wireless communication baseband circuit; 51: first selector switch; 52: second selector switch; 53: selection circuit; 60: input circuit.

### DESCRIPTION OF EMBODIMENTS

To make objectives, technical solutions, and advantages of this application clearer, the following clearly and completely describes the technical solutions in this application with reference to the accompanying drawings in this application. It is clear that the described embodiments are merely some rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as indicating or implying relative importance, or indicating or implying a sequence. "And/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "Mounting", "connection", "being connected to", and the like should be understood in a broad sense, for example, may be a fixed connection, a detachable connection, or an integral connection, or may be a direct connection, an indirect connection through an intermediate medium, or internal communication between two elements. In addition, the terms "include", "have", and any variant thereof are intended to cover non-exclusive inclusion, for example, include a series of steps or units. For example, a method, system, product, or device is not necessarily limited to those steps or units expressly listed, but may include other steps or units not expressly listed or inherent to such a process, method, product, or device. "On", "below", "left", "right", and the like are used only relative to the orientation of the components in the accompanying drawings. These directional terms are relative concepts, are used for relative descriptions and clarifications, and may change accordingly as positions at which the components in the accompanying drawings are placed change.

An embodiment of this application provides a terminal. The terminal may be a device including a chip, for example, a mobile phone, a computer, a tablet computer, a personal digital assistant (personal digital assistant, PDA for short), a smart wearable device, or a smart home device. This is not limited in this embodiment of this application. For ease of description, the following uses the mobile phone as an example for description.

In recent years, a BeiDou navigation satellite system (BeiDou navigation satellite system, BDS), for which global satellite networking is completed in 2020, develops rapidly, and is a third mature navigation satellite system following a navigation satellite system like a global positioning system (global positioning system, GPS) and a global navigation satellite system (global navigation satellite system, GLONASS). In addition, the BeiDou navigation satellite system is a satellite system with navigation and communication capabilities. In a radio navigation satellite system (radio navigation satellite system), a user receives a satellite radio navigation signal, independently measures distances to at least four satellites, and calculates a location, a speed, and a navigation parameter of the user, to implement a satellite navigation function. A radio determination satellite system (radio determination satellite system, for satellite communication), as a unique service function of the BeiDou navigation satellite system, can provide a two-way short message information service, to implement a satellite communication function. A BeiDou short message is a special function of the BeiDou navigation satellite system, and is used to distinguish the BeiDou navigation satellite system from other satellite communication systems in the world.

The BeiDou short message has been widely used in fields such as disaster relief, field work, and no man's land search and rescue. A terminal device integrated with a satellite communication function module may perform emergency communication by using the BeiDou short message.

Further, a BeiDou-3 global navigation satellite system continuously improves a service capability of the BeiDou short message, so that a regional short message communication (regional short message communication, RSMC) in the BeiDou short message has reached a maximum communication capability of 14,000 bits (1000 Chinese characters) each time, and a global short message communication (global short message communication, GSMC) in the BeiDou short message has reached a communication capability of 560 bits (40 Chinese characters) each time. Based on the stronger communication capability, a BeiDou short message communication service is further expanded to the consumer field to provide more extensive services such as emergency rescue alarm, emergency communication, and location report, thereby fully demonstrating a core application value of a BeiDou short message function. In some possible implementations, the terminal device may be an in-vehicle terminal device, a mobile phone, a BeiDou handheld device, or the like.

In addition to satellite communication, a low-orbit satellite mobile communication service provider represented by the Globalstar satellite (Globalstar satellite) or the like is also actively developing narrowband satellite communication services, such as short message, voice, and picture services. Satellite systems such as Starlink and Iridium are also planned to support a communication function of a satellite-to-cellular service. In the future, the satellite communication function will be more widely applied to products such as a consumer terminal.

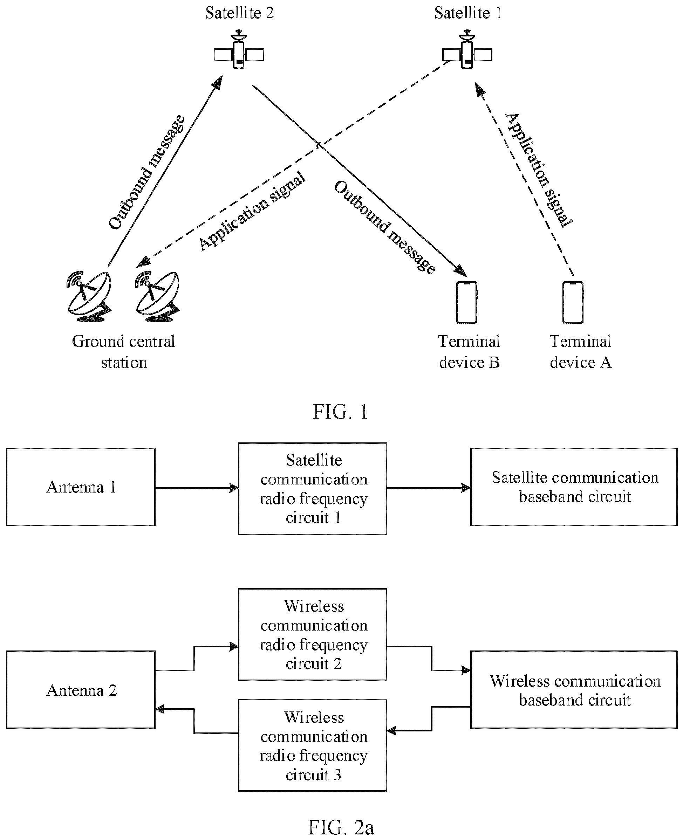

As shown in FIG. 1, an example in which a transmitter is a terminal device A and a receiver is a terminal device B is used. A communication procedure of a satellite system like an RDSS is as follows: After completing satellite searching, the terminal device A first encrypts an application signal including an identity (identity document, ID) of the terminal device B and communication content, and then sends the encrypted application signal to a visible satellite 1; the visible satellite 1 transparently forwards an uplink application signal to a ground central station; after receiving the application signal, the ground central station decrypts and then encrypts the application signal; when the terminal device B initiates an information query, the ground central station encrypts information that belongs to the terminal device B, adds the encrypted information into a satellite 2 visible to the terminal device B, and broadcasts the encrypted information to the terminal device B through the satellite 2; and the terminal device B receives an outbound message, and demodulates and decrypts the outbound message, to complete satellite communication once.

FIG. 1 shows an example in which a visible satellite of the terminal device A is the satellite 1, a visible satellite of the terminal device B is the satellite 2, and the satellite 1 and the satellite 2 are different satellites. In some other possible implementations, visible satellites of the terminal device A and the terminal device B may alternatively be a same satellite, that is, the satellite 1 and the satellite 2 are a same satellite.

As satellite communication is more widely applied to a consumer market, a satellite communication function module may be further integrated with a wireless communication function module like a Wi-Fi function module, a BT function module, or a cellular function module into a same terminal device. For example, the satellite communication function module and the BT function module are integrated into the same terminal device A, and the satellite communication function module communicates with the terminal device B through the BT function module, to implement interconnection between the satellite communication function module and the mobile Internet. Alternatively, the satellite communication function module and the wireless communication function module like the BT function module, the Wi-Fi function module, or the cellular function module are directly integrated into a same intelligent device, and interconnection and interworking between the satellite communication function module and the wireless communication function module like the BT function module, the Wi-Fi function module, or the cellular function module are implemented through an application processor in the intelligent device.

However, as shown in FIG. 2a, although the satellite communication function module integrated into the terminal device A may communicate with the terminal device B, and the satellite communication function module and the wireless communication function module like the BT function module, the Wi-Fi function module, or the cellular function module that are in the same terminal device may communicate with each other, an existing satellite communication function module is usually integrated on an independent chip. Consequently, the terminal device has low product integration, and high board-level costs. Therefore, deep coupling of or even integrating the satellite communication function module, and the wireless communication function module like the Wi-Fi function module, the BT function module, or the cellular function module on a same chip becomes an industrial development requirement.

In addition, signal receiving sensitivity of satellite communication needs to be improved, to implement wide application of satellite communication.

In the related technology 1, coherent integration time is increased to improve signal receiving sensitivity of satellite communication. However, the coherent integration time cannot be increased infinitely due to impact of a navigation message format. In addition, that coherent integration time is increased to improve signal receiving sensitivity of satellite communication cannot be applied to a cold start scenario, namely, a scenario in which a satellite communication receive system is just started. Therefore, this technology cannot stably improve signal receiving sensitivity of satellite communication.

In the related technology 2, a plurality of antennas are integrated into the terminal device, the plurality of antennas receive radio frequency signals for satellite communication, and an optimal signal is selected for use, to maximize quality of satellite communication. However, this solution is applicable only to a special scenario in which radio frequency signals received by some antennas are intermittent, and the like. If radio frequency signals received by all antennas are poor, communication performance of the terminal device cannot be ensured.

To improve signal receiving sensitivity of satellite communication, the inventor finds that the plurality of antennas may be used to receive the radio frequency signals for satellite communication, to improve signal receiving sensitivity of satellite communication. For example, two antennas are used to receive radio frequency signals for satellite communication, so that signal receiving sensitivity of satellite communication can be improved by 2 dB to 3 dB. In addition, the plurality of antennas may be used to receive the radio frequency signals for satellite communication, to counter a signal fluctuation caused by a change in an external environment, and improve signal stability in a satellite communication loop.

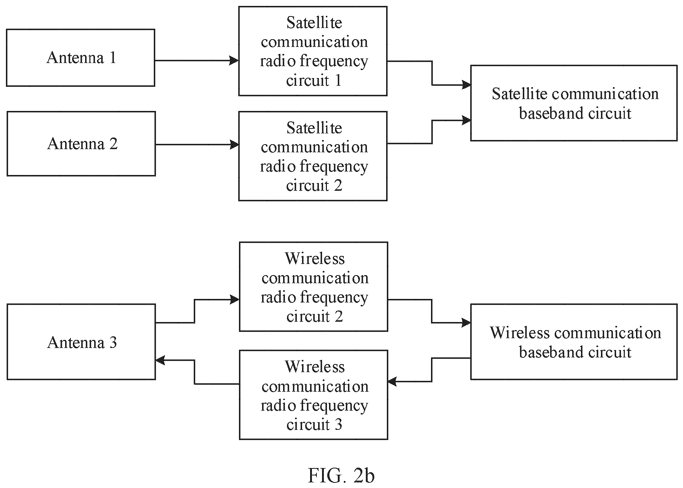

However, as mentioned above, currently, the satellite communication function module and the wireless communication function module like the BT function module, the Wi-Fi function module, or the cellular function module that are in the same terminal device are all integrated on independent chips. Therefore, as shown in FIG. 2b, even if the plurality of antennas are used to receive the radio frequency signals for satellite communication, the satellite communication function module is still integrated on an independent chip. That is, a chip for a satellite communication service and a matching antenna thereof need to be additionally added.

In view of this, an embodiment of this application provides a terminal device. The terminal device may receive radio frequency signals by using a plurality of antennas for satellite communication, to improve signal receiving sensitivity and stability of satellite communication; and may further deeply couple a satellite communication function module and a wireless communication function module like a BT function module, a Wi-Fi function module, or a cellular function module, so that the satellite communication function module and the wireless communication function module like the BT function module, the Wi-Fi function module, or the cellular function module are integrated on a same chip.

The following describes a circuit structure of the terminal device in detail with reference to the accompanying drawings.

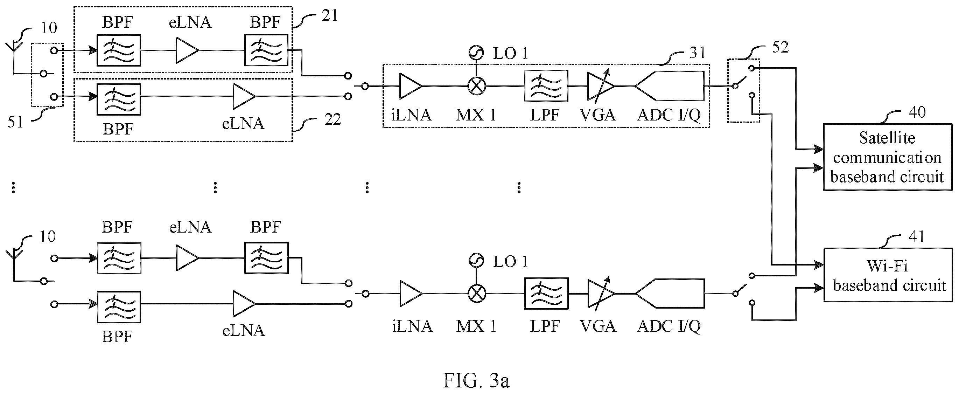

As shown in FIG. 3a to FIG. 3d, the terminal device includes a plurality of receivers, and each receiver includes an antenna 10, a first radio frequency front-end circuit 21, a second radio frequency front-end circuit 22, and a first radio frequency receive circuit 31. The terminal device further includes a satellite communication baseband circuit 40 and a wireless communication baseband circuit 41.

The first radio frequency receive circuit 31 is configured to: receive a first radio frequency signal sent by the antenna 10 through the first radio frequency front-end circuit 21, process the first radio frequency signal into a first baseband signal, and send the first baseband signal to the same satellite communication baseband circuit 40. Alternatively, the first radio frequency receive circuit 31 is configured to: receive a second radio frequency signal sent by the antenna 10 through the second radio frequency front-end circuit 22, process the second radio frequency signal into a second baseband signal, and send the second baseband signal to the same wireless communication baseband circuit 41.

In some possible implementations, the satellite communication baseband circuit 40 may be an RDSS baseband circuit, and is configured to receive a satellite communication baseband signal for satellite communication. The wireless communication baseband circuit 41 may be a wireless communication baseband circuit like a Wi-Fi baseband circuit, a BT baseband circuit, a ZigBee baseband circuit, or a radio frequency identification (radio frequency identification, RFID) baseband circuit. For ease of description, unless otherwise described below, the following uses an example in which the wireless communication baseband circuit 41 is a Wi-Fi baseband circuit for description. The Wi-Fi baseband circuit is configured to receive a Wi-Fi baseband signal for Wi-Fi communication.

Communication principles of any receiver, the satellite communication baseband circuit 40, and the wireless communication baseband circuit 41 may be implemented in the following process.

As shown in FIG. 3a, the antenna 10 is configured to receive radio frequency signals, and the radio frequency signals may be processed for satellite communication and Wi-Fi communication. Because a frequency band of a radio frequency signal for satellite communication is slightly different from a frequency band of a radio frequency signal for Wi-Fi communication, the antenna 10 may respectively transmit, through the first radio frequency front-end circuit 21 and the second radio frequency front-end circuit 22, the radio frequency signal for satellite communication and the radio frequency signal for Wi-Fi communication.

As shown in FIG. 3a, the first radio frequency front-end circuit 21 may include an external filter, an external amplifier, and the like. When the antenna 10 is electrically connected to the first radio frequency receive circuit 31 through the first radio frequency front-end circuit 21, after receiving a radio frequency signal, the first radio frequency front-end circuit 21 may filter the radio frequency signal through the external filter, to filter the radio frequency signal to a frequency band for satellite communication, and filter out out-of-band interference. Alternatively, the radio frequency signal may be amplified through the external amplifier, so that signal strength of the amplified radio frequency signal meets signal strength for satellite communication. The filtered and amplified radio frequency signal may be referred to as the first radio frequency signal. The external filter may include, for example, at least one band-pass filter (band-pass filter, BPF), and the external amplifier may include at least one low noise amplifier (low noise amplifier, LNA).

Still refer to FIG. 3a. The second radio frequency front-end circuit 22 may also include an external filter, an external amplifier, and the like. When the antenna 10 is electrically connected to the first radio frequency receive circuit 31 through the second radio frequency front-end circuit 22, after receiving a radio frequency signal, the second radio frequency front-end circuit 22 may filter the radio frequency signal through the external filter, to filter the radio frequency signal to a frequency band for Wi-Fi communication, and filter out out-of-band interference. Alternatively, the radio frequency signal may be amplified through the external amplifier, so that signal strength of the amplified radio frequency signal meets signal strength for Wi-Fi communication. The filtered and amplified radio frequency signal may be referred to as the second radio frequency signal. The external filter may include, for example, at least one BPF, and the external amplifier may include at least one LNA.

In some possible implementations, the terminal device may further include a first selector switch 51, and the antenna 10 is electrically connected to the first radio frequency front-end circuit 21 or the second radio frequency front-end circuit 22 through the first selector switch 51, to send a radio frequency signal to the first radio frequency front-end circuit 21 or the second radio frequency front-end circuit 22.

Because a satellite radio downlink frequency band specified by the International Telecommunication Union (ITU) is an S frequency band, a range of the S frequency band is 2483.5 MHz to 2500 MHz, and downlink frequency bands of a BeiDou short message, Globalstar, Starlink, Iridium, and the like are this frequency band. However, a frequency band range of Wi-Fi (for example, 2.4 G Wi-Fi) communication and a frequency band range of BT communication are 2400 MHz to 2483.5 MHz, and a frequency band range of cellular (for example, LTE B41 and NR N41) communication is 2496 MHz to 2690 MHz. A downlink frequency band of satellite communication is close to frequency bands of Wi-Fi communication, BT communication, and cellular communication, and received radio frequency signals are similar in feature. Therefore, embodiments of this application provide a terminal device. As frequency bands of satellite communication, Wi-Fi communication, BT communication, and cellular communication are close, and received radio frequency signals are similar in feature, the terminal device may enable satellite communication and Wi-Fi communication and/or BT communication, or cellular communication to share at least some of received radio frequency receive paths, to integrate a downlink part of the satellite communication function module and the wireless communication function module like the BT function module and/or the Wi-Fi function module or the cellular function module on a same chip.

A downlink S frequency band of satellite communication is close to a downlink frequency band of Wi-Fi communication, and received radio frequency signals are similar in feature, so that the first radio frequency signal used to form a satellite communication baseband signal and the second radio frequency signal used to form a Wi-Fi baseband signal may share the same first radio frequency receive circuit 31. In other words, an input end of the first radio frequency receive circuit 31 is electrically connected to the first radio frequency front-end circuit 21 or the second radio frequency front-end circuit 22, to receive the first radio frequency signal sent by the first radio frequency front-end circuit 21 or the second radio frequency signal sent by the second radio frequency front-end circuit 22. In this way, the satellite communication function module and the Wi-Fi function module are deeply coupled and integrated on a same chip, to improve product integration of the terminal device, reduce board-level costs by reducing board-level cabling, and further avoid low integration of the chip due to independence of the satellite communication function module and the Wi-Fi function module from each other.

In some possible implementations, as shown in FIG. 3a, the first radio frequency front-end circuit 21 and the second radio frequency front-end circuit 22 may be electrically connected to the first radio frequency receive circuit 31 through a selector switch, to receive the first radio frequency front-end circuit 21 and the second radio frequency front-end circuit 22.

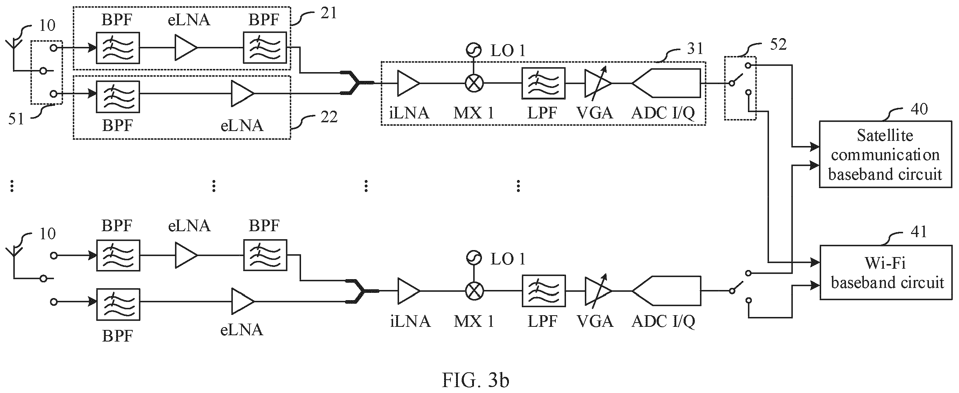

Alternatively, as shown in FIG. 3b, the first radio frequency front-end circuit 21 and the second radio frequency front-end circuit 22 may be electrically connected to the first radio frequency receive circuit 31 through a combiner. The antenna 10 is electrically connected to the first radio frequency front-end circuit 21 or the second radio frequency front-end circuit 22 through the first selector switch 51. Therefore, the first radio frequency front-end circuit 21 or the second radio frequency front-end circuit 22 may receive a radio frequency signal sent by the antenna 10, and process the radio frequency signal into the first radio frequency signal or the second radio frequency signal. In this way, even if the first radio frequency front-end circuit 21 and the second radio frequency front-end circuit 22 are electrically connected to the first radio frequency receive circuit 31 through the combiner, the first radio frequency receive circuit 31 receives only the first radio frequency signal or the second radio frequency signal.

As shown in FIG. 2a, the first radio frequency receive circuit 31 may include a first frequency mixer MX 1, a built-in filter, a built-in LNA, a built-in variable gain amplifier (variable gain amplifier, VGA), an analog-to-digital conversion circuit (analog-to-digital conversion, ADC), and the like. The terminal device may further include a first local oscillator circuit LO 1.

When the antenna 10 is electrically connected to the first radio frequency receive circuit 31 through the first radio frequency front-end circuit 21, after receiving the first radio frequency signal, the first radio frequency receive circuit 31 may further amplify the first radio frequency signal through the built-in LNA, so that signal strength of the amplified first radio frequency signal better meets signal strength for satellite communication. Alternatively, the first frequency mixer MX 1 may be used to perform frequency mixing on the first radio frequency signal and a first local oscillator signal provided by the first local oscillator circuit LO 1, to obtain a baseband signal. A frequency of the first local oscillator signal corresponds to a frequency band for satellite communication. Alternatively, the built-in filter may be used to filter the baseband signal obtained by performing frequency mixing through the first frequency mixer MX 1, so that a frequency band of the baseband signal better meets a frequency band for satellite communication, and out-of-band interference is filtered out. Alternatively, the built-in VGA may be used to control a gain of the baseband signal, to prevent a signal saturation phenomenon of the baseband signal. Then, a baseband signal in an analog signal form is converted into a digital signal through the ADC, to obtain a first baseband signal, and the first baseband signal is sent to the satellite communication baseband circuit 40. The built-in filter may be a low-pass filter (low-pass filter, LPF). To distinguish an external LNA from a built-in LNA, the external LNA may be an eLNA, and the built-in LNA may be an iLNA.

When the antenna 10 is electrically connected to the first radio frequency receive circuit 31 through the second radio frequency front-end circuit 22, after receiving the second radio frequency signal, the first radio frequency receive circuit 31 may further amplify the second radio frequency signal through the iLNA, so that signal strength of the amplified second radio frequency signal better meets signal strength for Wi-Fi communication. Alternatively, the first frequency mixer MX 1 may be used to perform frequency mixing on the second radio frequency signal and a first local oscillator signal provided by the first local oscillator circuit LO 1, to obtain a baseband signal. A frequency of the first local oscillator signal corresponds to a frequency band for Wi-Fi communication. Alternatively, the built-in filter may be used to filter the baseband signal obtained by performing frequency mixing through the first frequency mixer MX 1, so that a frequency band of the baseband signal better meets a frequency band for Wi-Fi communication, and out-of-band interference is filtered out. Alternatively, the built-in VGA may be used to control a gain of the baseband signal, to prevent a signal saturation phenomenon of the baseband signal. Then, a baseband signal in an analog signal form is converted into a digital signal through the ADC, to obtain a second baseband signal, and the second baseband signal is sent to the wireless communication baseband circuit 41. The built-in filter may be an LPF.

In the related technology, to improve a signal transmission rate, a wireless communication signal is usually transmitted by using multiple-in multiple-out (multiple-in multiple-out, MIMO) in a wireless communication system. That is, wireless communication is performed by using a plurality of receivers and a plurality of transmitters. For example, 2*2 MIMO is applied to Wi-Fi communication of a mobile phone A. That is, two transmitters, two transmitters, and two Wi-Fi baseband circuits are used in Wi-Fi communication of the mobile phone A, to receive and send signals for Wi-Fi communication. For another example, 4*4 MIMO is applied to long-term evolution (long term evolution, LTE) of a universal mobile communication technology of a mobile phone B. That is, four transmitters, four receivers, and one cellular baseband circuit are used in LTE of the mobile phone B, to receive and send signals for cellular communication.

In this application, the first radio frequency front-end circuit 21 is added based on antennas 10 of the plurality of existing receivers, the second radio frequency front-end circuit 22, and the first radio frequency receive circuit 31, so that satellite communication and Wi-Fi communication are implemented in a time division manner. In this way, radio frequency signals for satellite communication are received through a plurality of antennas 10, to improve signal receiving sensitivity of satellite communication and signal stability in a satellite communication loop, further improve integration of satellite communication and Wi-Fi communication function modules and reduce a layout area and board-level costs by reducing board-level cabling. It should be noted herein that a quantity of receivers is not limited in this embodiment of this application.

In addition, in this embodiment of this application, the satellite communication baseband circuit 40 and the wireless communication baseband circuit 41 may be further integrated with a plurality of first radio frequency receive circuits 31 of the plurality of receivers on a same chip, to further improve product integration of the terminal device and reduce board-level costs by reducing board-level cabling.

In some possible implementations, the terminal device may further include a second selector switch 52, and the first radio frequency receive circuit 31 is electrically connected to the satellite communication baseband circuit 40 or the wireless communication baseband circuit 41 through the second selector switch 52.

When the antenna 10 is electrically connected to the first radio frequency receive circuit 31 through the first radio frequency front-end circuit 21, the first radio frequency receive circuit 31 is electrically connected to the satellite communication baseband circuit 40 through the second selector switch 52, so that the first radio frequency receive circuit 31 sends the first baseband signal to the satellite communication baseband circuit 40.

When the antenna 10 is electrically connected to the first radio frequency receive circuit 31 through the second radio frequency front-end circuit 22, the first radio frequency receive circuit 31 is electrically connected to the wireless communication baseband circuit 41 through the second selector switch 52, so that the first radio frequency receive circuit 31 sends the second baseband signal to the wireless communication baseband circuit 41.

The foregoing description is an example for describing a case in which the wireless communication baseband circuit 41 is a Wi-Fi baseband circuit. In some other possible implementations, the first wireless communication baseband circuit 41 may alternatively be a BT baseband circuit, a ZigBee baseband circuit, an RFID baseband circuit, or the like.

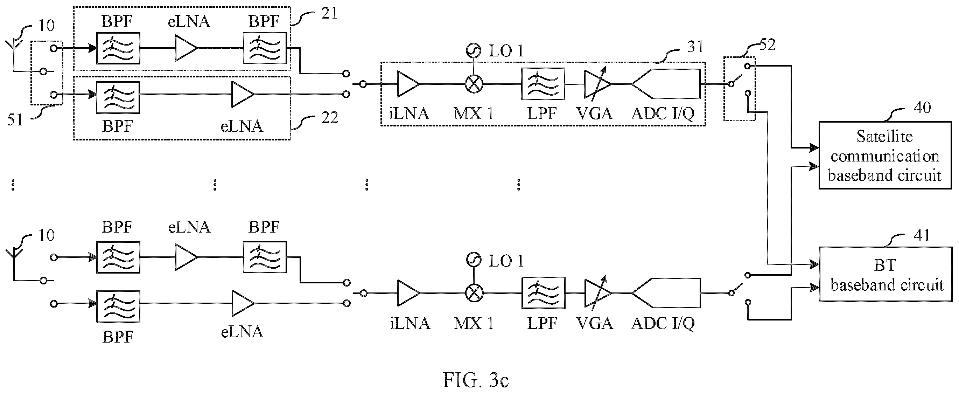

For example, as shown in FIG. 3c, if the first wireless communication baseband circuit 41 is a BT baseband circuit, when the antenna 10 is electrically connected to the first radio frequency receive circuit 31 through the second radio frequency front-end circuit 22, any one of the foregoing amplifiers may amplify a radio frequency signal sent by the antenna 10, so that signal strength of the amplified radio frequency signal better meets signal strength for BT communication. A frequency of the first local oscillator signal corresponds to a frequency band for BT communication. Any one of the foregoing filters may filter a radio frequency signal sent by the antenna 10, so that a frequency band of the radio frequency signal meets a frequency band for BT communication, and out-of-band interference is filtered out. Other explanations, descriptions, and beneficial effects are the same as those described in the foregoing description that the first wireless communication baseband circuit 41 is a Wi-Fi baseband circuit. Details are not described herein again.

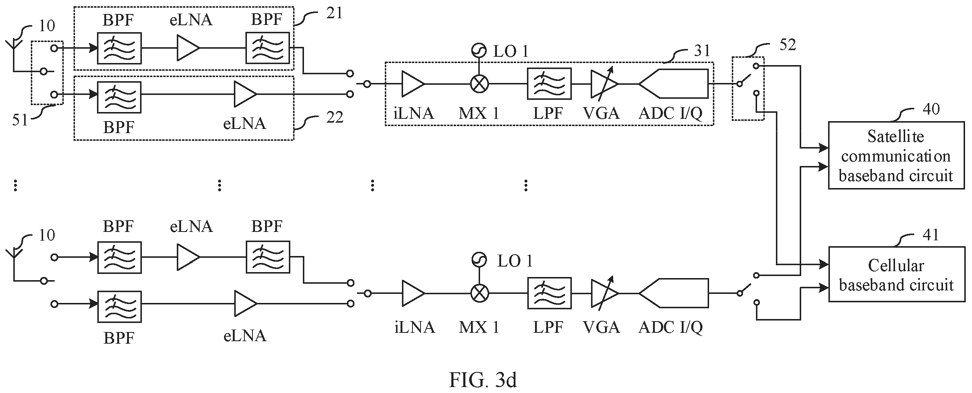

For another example, as shown in FIG. 3d, if the wireless communication baseband circuit 41 is a cellular baseband circuit, when the antenna 10 is electrically connected to the first radio frequency receive circuit 31 through the second radio frequency front-end circuit 22, any one of the foregoing amplifiers may amplify a radio frequency signal sent by the antenna 10, so that signal strength of the amplified radio frequency signal better meets signal strength for cellular communication. A frequency of the first local oscillator signal corresponds to a frequency band for cellular communication. Any one of the foregoing filters may filter a radio frequency signal sent by the antenna 10, so that a frequency band of the radio frequency signal meets a frequency band for cellular communication, and out-of-band interference is filtered out. Other explanations, descriptions, and beneficial effects are the same as those described in the foregoing description that the wireless communication baseband circuit 41 is a Wi-Fi baseband circuit. Details are not described herein again.

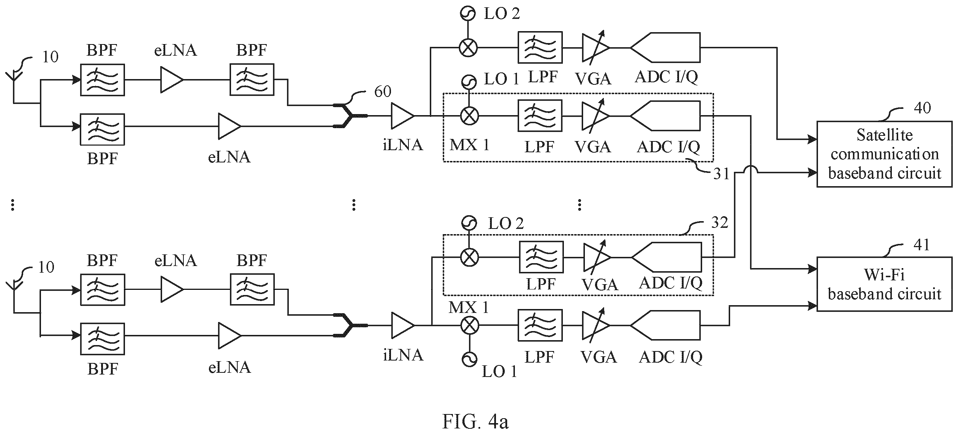

In another embodiment, as shown in FIG. 4a, the terminal device includes a plurality of receivers, and each receiver includes an antenna 10, a first radio frequency front-end circuit 21, a second radio frequency front-end circuit 22, a first radio frequency receive circuit 31, and a second radio frequency receive circuit 32. The terminal device further includes a satellite communication baseband circuit 40 and a wireless communication baseband circuit 41.

In a first case, as shown in FIG. 4a, the first radio frequency receive circuit 31 is configured to: receive a first radio frequency signal sent by the antenna 10 through the first radio frequency front-end circuit 21, process the first radio frequency signal into a first baseband signal, and send the first baseband signal to the same satellite communication baseband circuit 40. The second radio frequency receive circuit 32 is configured to: receive a second radio frequency signal sent by the second radio frequency front-end circuit 22, process the second radio frequency signal into a second baseband signal, and send the second baseband signal to the same wireless communication baseband circuit 41.

Specifically, as shown in FIG. 4a, the antenna 10 is configured to receive radio frequency signals, and the radio frequency signals may be processed for satellite communication and Wi-Fi communication. Because a frequency of a radio frequency signal for satellite communication is slightly different from a frequency band of a radio frequency signal for Wi-Fi communication, the antenna 10 may respectively transmit, through the first radio frequency front-end circuit 21 and the second radio frequency front-end circuit 22, the radio frequency signal for satellite communication and the radio frequency signal for Wi-Fi communication.

As shown in FIG. 4a, the first radio frequency front-end circuit 21 may include an external filter, an external amplifier, and the like. When the antenna 10 is electrically connected to the first radio frequency receive circuit 31 through the first radio frequency front-end circuit 21, after receiving a radio frequency signal, the first radio frequency front-end circuit 21 may filter the radio frequency signal through the external filter, to filter the radio frequency signal to a frequency band for satellite communication, and filter out out-of-band interference. Alternatively, the radio frequency signal may be amplified through the external amplifier, so that signal strength of the amplified radio frequency signal meets signal strength for satellite communication. The filtered and amplified radio frequency signal may be referred to as the first radio frequency signal. The external filter may include, for example, at least one BPF, and the external amplifier may include at least one LNA.

Still refer to FIG. 4a. The second radio frequency front-end circuit 22 may also include an external filter, an external amplifier, and the like. When the antenna 10 is electrically connected to the first radio frequency receive circuit 31 through the second radio frequency front-end circuit 22, after receiving a radio frequency signal, the second radio frequency front-end circuit 22 may filter the radio frequency signal through the external filter, to filter the radio frequency signal to a frequency band for Wi-Fi communication, and filter out out-of-band interference. Alternatively, the radio frequency signal may be amplified through the external amplifier, so that signal strength of the amplified radio frequency signal meets signal strength for Wi-Fi communication. The filtered and amplified radio frequency signal may be referred to as the second radio frequency signal. The external filter may include, for example, at least one BPF, and the external amplifier may include at least one LNA.

A downlink S frequency band of satellite communication is close to a downlink frequency band of Wi-Fi communication, and received radio frequency signals are similar in feature, so that the first radio frequency signal used to form a satellite communication baseband signal and the second radio frequency signal used to form a Wi-Fi baseband signal share a same input circuit 60. In other words, an input end of the input circuit 60 is electrically connected to the first radio frequency front-end circuit 21 and the second radio frequency front-end circuit 22 separately, to receive the first radio frequency signal sent by the first radio frequency front-end circuit 21 and the second radio frequency signal sent by the second radio frequency front-end circuit 22. In addition, an output end of the input circuit 100 is electrically connected to the first radio frequency receive circuit 31 and the second radio frequency receive circuit 32 separately, to send the first radio frequency signal to the first radio frequency receive circuit 31 and send the second radio frequency signal to the second radio frequency receive circuit 32 through the same output end. In this way, the first radio frequency receive circuit 31 and the second radio frequency receive circuit 32 that are electrically connected to the same output end of the input circuit 100 are integrated on a same chip, to improve product integration of the terminal device and reduce board-level costs by reducing board-level cabling.

In some possible implementations, the input circuit 60 may also be integrated with the first radio frequency receive circuit 31 and the second radio frequency receive circuit 32 on a same chip, to further improve product integration of the terminal device and reduce board-level costs by reducing board-level cabling.

A specific circuit structure of the input circuit 60 is not limited in this embodiment of this application, provided that the input circuit 60 includes two input ends and one output end, to receive the first radio frequency signal and the second radio frequency signal through the two input ends respectively, and output the first radio frequency signal and the second radio frequency signal through the one output end. Optionally, the input circuit 60 may be a combiner.

As shown in FIG. 4a, the first radio frequency receive circuit 31 may include a first frequency mixer MX 1, a built-in filter, an iLNA, a built-in VGA, an ADC, and the like. The terminal device may further include a first local oscillator circuit LO 1. After receiving the first radio frequency signal, the first radio frequency receive circuit 31 may further amplify the first radio frequency signal through the iLNA, so that signal strength of the amplified first radio frequency signal better meets signal strength for satellite communication. Alternatively, the first frequency mixer MX 1 may be used to perform frequency mixing on the first radio frequency signal and a first local oscillator signal provided by the first local oscillator circuit LO 1, to obtain a baseband signal. A frequency of the first local oscillator signal corresponds to a frequency band for satellite communication. Alternatively, the built-in filter may be used to filter the baseband signal obtained by performing frequency mixing through the first frequency mixer MX 1, so that a frequency band of the baseband signal better meets a frequency band for satellite communication, and out-of-band interference is filtered out. Alternatively, the VGA may be used to control a gain of the baseband signal, to prevent a signal saturation phenomenon of the baseband signal. Then, a baseband signal in an analog signal form is converted into a digital signal through the ADC, to obtain a first baseband signal, and the first baseband signal is sent to the satellite communication baseband circuit 40. The built-in filter may be an LPF.

Still refer to FIG. 4a. The second radio frequency receive circuit 32 may include a second frequency mixer MX 2, a built-in filter, an iLNA, a built-in VGA, an ADC, and the like. The terminal device may further include a second local oscillator circuit LO 2. After receiving the second radio frequency signal, the second radio frequency receive circuit 32 may further amplify the second radio frequency signal through the built-in LNA, so that signal strength of the amplified second radio frequency signal better meets signal strength for Wi-Fi communication. Alternatively, the second frequency mixer MX 2 may be used to perform frequency mixing on the second radio frequency signal and a second local oscillator signal provided by the second local oscillator circuit LO 2, to obtain a baseband signal. A frequency of the second local oscillator signal corresponds to a frequency band for Wi-Fi communication. Alternatively, the built-in filter may be used to filter the baseband signal obtained by performing frequency mixing through the second frequency mixer MX 2, so that a frequency band of the baseband signal better meets a frequency band for Wi-Fi communication, and out-of-band interference is filtered out. Alternatively, the VGA may be used to control a gain of the baseband signal, to prevent a signal saturation phenomenon of the baseband signal. Then, a baseband signal in an analog signal form is converted into a digital signal through the ADC, to obtain a second baseband signal, and the second baseband signal is sent to the wireless communication baseband circuit 41. The built-in filter may be an LPF.

A process in which the first radio frequency signal is transmitted from the first radio frequency front-end circuit 21, the input circuit 60, and the first radio frequency receive circuit 31 to the satellite communication baseband circuit 40 and a process in which the second radio frequency signal is transmitted from the second radio frequency front-end circuit 22, the input circuit 60, and the second radio frequency receive circuit 32 to the wireless communication baseband circuit 41 do not interfere with each other. In other words, in the process in which the first radio frequency signal is transmitted to the satellite communication baseband circuit 40, transmission of the second radio frequency signal to the wireless communication baseband circuit 41 is not affected. Alternatively, in the process in which the second radio frequency signal is transmitted to the wireless communication baseband circuit 41, transmission of the first radio frequency signal to the satellite communication baseband circuit 40 is affected. Therefore, satellite communication and Wi-Fi communication may further be performed simultaneously.

In addition, in this embodiment of this application, the satellite communication baseband circuit 40 and the wireless communication baseband circuit 41 may be further integrated with the first radio frequency receive circuit 31, the second radio frequency receive circuit 32, and the input circuit 100 on a same chip, to further improve product integration of the terminal device and reduce board-level costs by reducing board-level cabling.

In a second case, with reference to FIG. 4a, the first radio frequency receive circuit 31 is configured to: receive a second radio frequency signal sent by the antenna 10 through the second radio frequency front-end circuit 22, process the second radio frequency signal into a second baseband signal, and send the second baseband signal to the same wireless communication baseband circuit 41. The second radio frequency receive circuit 32 is configured to: receive a first radio frequency signal sent by the first radio frequency front-end circuit 21, process the first radio frequency signal into a first baseband signal, and send the first baseband signal to the same satellite communication baseband circuit 40.

In this case, the first radio frequency receive circuit 31 may amplify the second radio frequency signal, so that signal strength of the amplified radio frequency signal better meets signal strength for Wi-Fi communication. A frequency of the first local oscillator signal corresponds to a frequency band for Wi-Fi communication. A filter in the first radio frequency receive circuit 31 may filter the second radio frequency signal, so that a frequency band of the radio frequency signal meets a frequency band for Wi-Fi communication.

The second radio frequency receive circuit 32 may amplify the first radio frequency signal, so that signal strength of the amplified radio frequency signal better meets signal strength for satellite communication. A frequency of the second local oscillator signal corresponds to a frequency band for satellite communication. A filter in the second radio frequency receive circuit 32 may filter the first radio frequency signal, so that a frequency band of the radio frequency signal meets a frequency band for satellite communication, and out-of-band interference is filtered out.

Other explanations, descriptions, and beneficial effects are the same as those described in the first case. Details are not described herein again.

In addition, it should be noted that the foregoing embodiment uses an example in which the satellite communication baseband circuit 40 is a Wi-Fi baseband circuit for description, and the satellite communication baseband circuit 40 may alternatively be a BT baseband circuit, a ZigBee baseband circuit, an RFID baseband circuit, or the like. A working principle thereof is the same as a working principle when the satellite communication baseband circuit 40 is a Wi-Fi baseband circuit. Details are not described herein again.

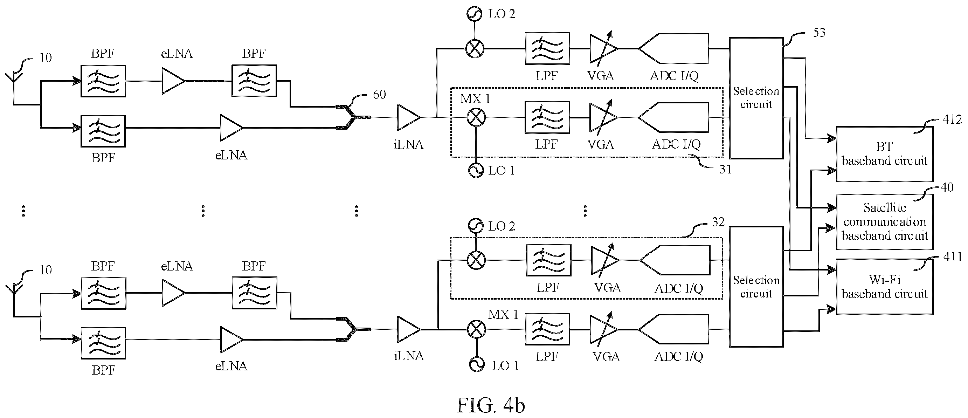

In some embodiments, as shown in FIG. 4b, the wireless communication baseband circuit 41 includes a first wireless communication baseband circuit 411 and a second wireless communication baseband circuit 412, and the first radio frequency receive circuit 31 or the second radio frequency receive circuit 32 is configured to send the second baseband signal to the same first wireless communication baseband circuit 411 or the same second wireless communication baseband circuit 412. For ease of description, the following uses an example in which the first wireless communication baseband circuit 411 is a Wi-Fi baseband circuit and the second wireless communication baseband circuit 412 is a BT baseband circuit for description.

The terminal device may include three working states. In a first working state, Wi-Fi communication and satellite communication are performed simultaneously. In a second working state, BT communication and satellite communication are performed simultaneously. In a third working state, BT communication and Wi-Fi communication are performed simultaneously.

In the first working state:
The first radio frequency receive circuit 31 may send the first baseband signal to the satellite communication baseband circuit 40, and the second radio frequency receive circuit 32 may send the second baseband signal to the first wireless communication baseband circuit 411. Alternatively, the first radio frequency receive circuit 31 may send the second baseband signal to the first wireless communication baseband circuit 411, and the second radio frequency receive circuit 32 may send the first baseband signal to the satellite communication baseband circuit 40. The following uses the former as an example for detailed description.

In some possible implementations, the terminal device may further include a plurality of selection circuits 53, and each selection circuit 53 is electrically connected between each of a first radio frequency receive circuit 31 and a second radio frequency receive circuit 32 of one receiver and all of the satellite communication baseband circuit 40, the first wireless communication baseband circuit 411, and the second wireless communication baseband circuit 412.

The first radio frequency receive circuit 31 receives the first radio frequency signal, and processes the first radio frequency signal into the first baseband signal, so that the first radio frequency receive circuit 31 may be controlled to send the first baseband signal to the satellite communication baseband circuit 40 through the selection circuit 53. The second radio frequency receive circuit 32 receives the second radio frequency signal, and processes the second radio frequency signal into the second baseband signal, so that the second radio frequency receive circuit 32 may be controlled to send the second baseband signal to the first wireless communication baseband circuit 411 through the selection circuit 53. In addition, providing of an enable signal for the second wireless communication baseband circuit 412 may be further stopped, so that the second wireless communication baseband circuit 412 suspends working. In addition, working principles and beneficial effects of other circuits in the terminal device are the same as those of the circuits in the terminal device in the first case. Details are not described herein again.

In the second working state:
The first radio frequency receive circuit 31 may send the first baseband signal to the satellite communication baseband circuit 40, and the second radio frequency receive circuit 32 may send a third baseband signal to the second wireless communication baseband circuit 412. Alternatively, the first radio frequency receive circuit 31 may send a third baseband signal to the second wireless communication baseband circuit 412, and the second radio frequency receive circuit 32 may send the first baseband signal to the satellite communication baseband circuit 40. The following uses the former as an example for detailed description. After receiving the second radio frequency signal, the second radio frequency receive circuit 32 may process the second radio frequency signal into the third baseband signal for BT communication.

The first radio frequency receive circuit 31 receives the first radio frequency signal, and processes the first radio frequency signal into the first baseband signal, so that the first radio frequency receive circuit 31 may be controlled to send the first baseband signal to the satellite communication baseband circuit 40 through the selection circuit 53. The second radio frequency receive circuit 32 receives the second radio frequency signal, and processes the second radio frequency signal into the third baseband signal, so that the second radio frequency receive circuit 32 may be controlled to send the third baseband signal to the second wireless communication baseband circuit 412 through the selection circuit 53. In addition, providing of an enable signal for the first wireless communication baseband circuit 411 may be further stopped, so that the first wireless communication baseband circuit 411 suspends working. In addition, working principles and beneficial effects of other circuits in the terminal device are the same as those of the circuits in the terminal device in the first case. Details are not described herein again.

In the third working state:
Because both a frequency band range of Wi-Fi (for example, 2.4 G Wi-Fi) communication and a frequency band range of BT communication are 2400 MHz to 2483.5 MHz, the first radio frequency receive circuit 31 and the second radio frequency receive circuit 32 may share the second radio frequency signal output by the second radio frequency front-end circuit 22. In this way, the first radio frequency receive circuit 31 and the second radio frequency receive circuit 32 are integrated on a same chip, to improve product integration of the terminal device and reduce board-level costs by reducing board-level cabling.

The first radio frequency receive circuit 31 sends the second baseband signal to the first wireless communication baseband circuit 411, and the second radio frequency receive circuit 32 may send a third baseband signal to the second wireless communication baseband circuit 412. Alternatively, the first radio frequency receive circuit 31 may send a third baseband signal to the second wireless communication baseband circuit 412, and the second radio frequency receive circuit 32 may send the second baseband signal to the first wireless communication baseband circuit 411. The following uses the former as an example for detailed description. After receiving the second radio frequency signal, the second radio frequency receive circuit 32 may process the second radio frequency signal into the third baseband signal for BT communication.

The first radio frequency receive circuit 31 receives the second radio frequency signal, and processes the second radio frequency signal into the second baseband signal, so that the first radio frequency receive circuit 31 may be controlled to send the second baseband signal to the first wireless communication baseband circuit 411 through the selection circuit 53. The second radio frequency receive circuit 32 receives the second radio frequency signal, and processes the second radio frequency signal into the third baseband signal, so that the second radio frequency receive circuit 32 is controlled to send the third baseband signal to the second wireless communication baseband circuit 412 through the selection circuit 53. In addition, providing of an enable signal for the satellite communication baseband circuit 40 may be further stopped, so that the satellite communication baseband circuit 40 suspends working. In addition, working principles and beneficial effects of other circuits in the terminal device are the same as those of the circuits in the terminal device in the first case. Details are not described herein again.

In addition, for any one of the foregoing embodiments, the first radio frequency front-end circuit 21, the second radio frequency front-end circuit 22, the first radio frequency receive circuit 31, and the second radio frequency receive circuit 32 in the receiver, the satellite communication baseband circuit 40, and the wireless communication baseband circuit 41 are all integrated on a same chip, to further improve product integration of the terminal device and reduce board-level costs by reducing board-level cabling.

In addition, for the foregoing two embodiments, the terminal device may further include a plurality of baseband transmit circuits and a plurality of third radio frequency front-end circuits. Each baseband transmit circuit may be electrically connected between the wireless communication baseband circuit 41 and the third radio frequency front-end circuit, and each third radio frequency front-end circuit may be electrically connected to the antenna 10. In this way, the wireless communication baseband circuit 41 may further transmit signals by using the plurality of baseband transmit circuits through the plurality of third radio frequency front-end circuits and the plurality of antennas 10. That is, the terminal device may further include a transmitter, and the transmitter and the receiver share the antenna 10.

In some possible implementations, the plurality of baseband transmit circuits, the first radio frequency receive circuit 31, the second radio frequency receive circuit 32, the wireless communication baseband circuit 41, and the satellite communication baseband circuit 40 may alternatively be integrated on a same chip.

In still another embodiment, due to a delay problem of a plurality of first baseband signals, phase deviation exists in the plurality of first baseband signals that are input to the same satellite communication baseband circuit 40. For example, because distances between a plurality of antennas 10 and satellites are different, the plurality of antennas 10 cannot receive radio frequency signals at the same time, resulting in delays of the plurality of first baseband signals; clock synchronization precision of a plurality of first radio frequency receive circuits 31 is not high, resulting in delays of the plurality of first baseband signals; and because process parameters and the like of a filter or an ADC in the plurality of first radio frequency receive circuits 31 may be different, a delay fluctuation exists, resulting in delays of the plurality of first baseband signals.

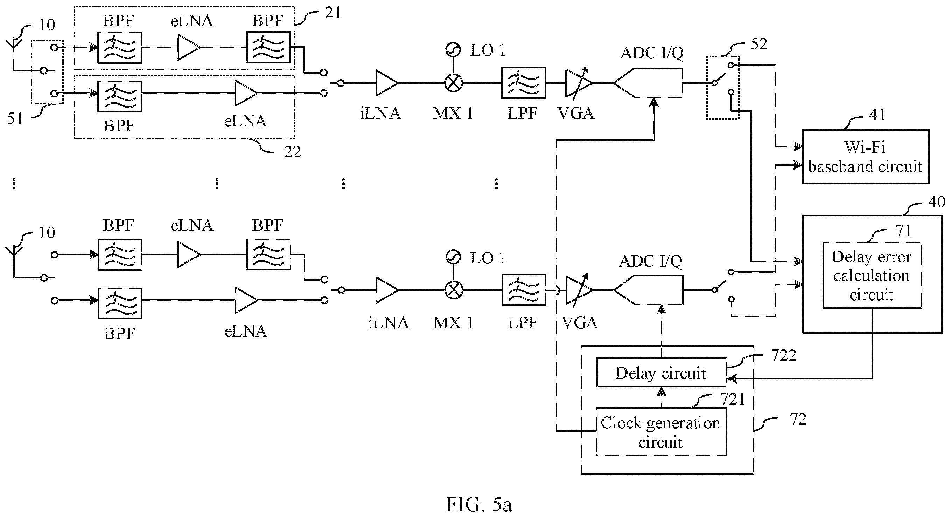

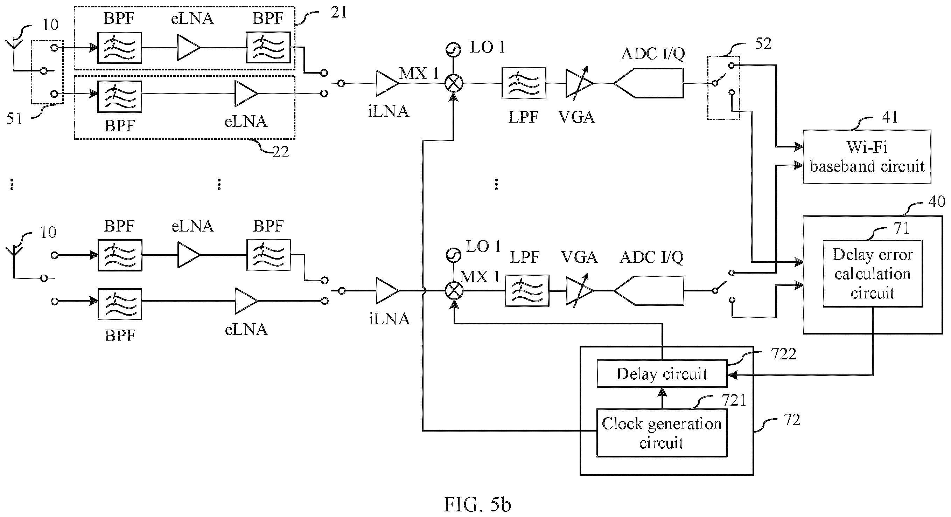

In view of this, as shown in FIG. 5a and FIG. 5b, the satellite communication baseband circuit 40 includes a delay error calculation circuit 71, and the terminal device further includes a signal synchronization circuit 72. When the first radio frequency receive circuit 31 receives the first radio frequency signal, the delay error calculation circuit 71 is configured to: calculate a delay error between a plurality of received first baseband signals, and send the delay error to the signal synchronization circuit 72. The signal synchronization circuit 72 is configured to perform synchronous calibration on the first radio frequency receive circuit 31 based on the delay error.

Specifically, the delay error calculation circuit 71 may receive a plurality of first baseband signals sent by a plurality of first radio frequency receive circuits 31, use a first baseband signal sent by one of the first radio frequency receive circuits 31 as a reference baseband signal, calculate a delay error between another first baseband signal and the reference baseband signal based on a cross-correlation fitting algorithm, and send each delay error to the signal synchronization circuit 72. Precision of the delay error calculated based on the cross-correlation fitting algorithm may reach 0.1 nanosecond (ns).

Then, in response to the delay error, the signal synchronization circuit 72 performs compensation on the first radio frequency receive circuit 31 other than a radio frequency receive circuit for transmitting the reference baseband signal, to perform signal synchronous calibration on the plurality of first baseband signals.

In some possible implementations, a specific compensated component in the first radio frequency receive circuit 31 is not limited in this embodiment of this application.

For example, the signal synchronization circuit 72 may be electrically connected to the ADC in the first radio frequency receive circuit 31, so that synchronous calibration on the plurality of first baseband signals is implemented in the ADC in the first radio frequency receive circuit 31. In this manner, nanosecond-level compensation may be implemented through a gate circuit, so that the plurality of first baseband signals are accurately synchronized.

For another example, the signal synchronization circuit 72 may be electrically connected to the first frequency mixer MX 1 in the first radio frequency receive circuit 31, so that synchronous calibration on the plurality of first baseband signals is implemented in the first frequency mixer MX 1.

In the foregoing examples, synchronous calibration is performed on the plurality of first baseband signals in the radio frequency part. In addition, synchronous calibration may be further performed on the plurality of first baseband signals in the satellite communication baseband circuit 40. In comparison with synchronous calibration performed on the plurality of first baseband signals in the radio frequency part, performing synchronous calibration on the plurality of first baseband signals in the satellite communication baseband circuit 40 may not need an extra external circuit.

In some possible implementations, the signal synchronization circuit 72 may include a clock generation circuit 721 and a delay circuit 722. The clock generation circuit 721 may provide a clock signal for the ADC or the first frequency mixer MX 1 in the first radio frequency receive circuit 31. In this way, when triggered by the clock signal, the ADC performs analog-to-digital conversion on a baseband signal to obtain the first baseband signal; or when triggered by the clock signal, the first frequency mixer MX 1 performs frequency mixing on the first radio frequency signal and the first local oscillator signal.

As shown in FIG. 5a and FIG. 5b, the clock generation circuit 721 may be electrically connected to the first radio frequency circuit 31 configured to transmit the reference baseband signal, and directly send the clock signal to the ADC or the first frequency mixer MX 1 in the first radio frequency circuit 31. That is, synchronous calibration does not need to be performed on the reference baseband signal.

Still refer to FIG. 5a and FIG. 5b. The clock generation circuit 721 may be further electrically connected to the delay circuit 722, and is configured to send the clock signal to the delay circuit 722. The delay circuit 722 not only may receive the clock signal sent by the clock generation circuit 721, but also may receive the delay error sent by the delay error calculation circuit 71, and send, based on the delay error between the another first baseband signal and the reference baseband signal, a clock signal obtained after delay compensation to an ADC or a first frequency mixer MX 1 in another first radio frequency receive circuit 31, to implement synchronous calibration on the another first baseband signal and the reference baseband signal, and improve processing precision of the plurality of first baseband signals.

Herein, the another first baseband signal is a first baseband signal other than the reference baseband signal. The another first radio frequency receive circuit 31 is a first radio frequency receive circuit 31 for transmitting the another first baseband signal.

In some possible implementations, synchronous calibration may be periodically performed on the plurality of first baseband signals. For example, synchronous calibration is performed every 5 minutes.

In some other possible implementations, synchronous calibration may be performed on the plurality of first baseband signals with reference to running statuses of the plurality of receivers. For example, in a time after the receiver is turned off and before the receiver is turned on, before the receiver works next time, the receiver may be turned on in advance, so that synchronous calibration may be performed on the plurality of first baseband signals by using the time of the turn-on in advance. In this way, when the receiver works next time, the receiver may stably input a plurality of calibrated first baseband signals to the satellite communication baseband circuit 40.

In still another embodiment, each antenna 10 may receive radio frequency signals sent by a plurality of satellites. However, some satellites are far away from the antennas 10. As a result, the radio frequency signals received by the antennas 10 are weak, which is not conducive to satellite communication. In view of this, quality evaluation may be further performed on the signals received by the antennas 10 from the plurality of satellites.

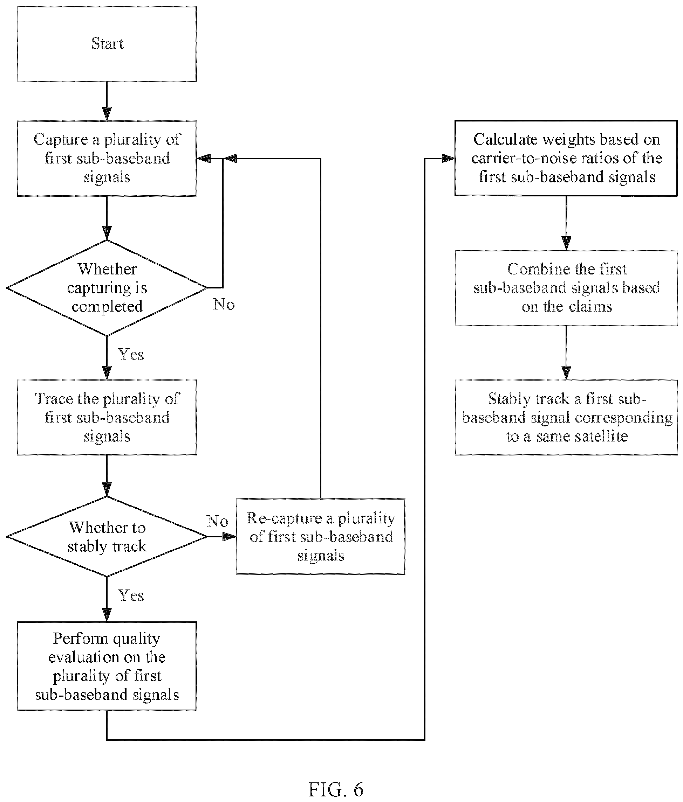

Specifically, as shown in FIG. 6, the first baseband signal includes a plurality of first sub-baseband signals received from a plurality of satellites. For example, the terminal device includes two receivers. An antenna 10 of a 1^{st} receiver receives radio frequency signals from a satellite A and a satellite B for satellite communication. A first baseband signal output by the 1^{st} receiver includes a first sub-baseband signal corresponding to the satellite A and a first sub-baseband signal corresponding to the satellite B. An antenna 10 of a 2^{nd} receiver also receives the radio frequency signals from the satellite A and the satellite B for satellite communication. A first baseband signal output by the 2^{nd} receiver includes a first sub-baseband signal corresponding to the satellite A and a first sub-baseband signal corresponding to the satellite B.

If the satellite communication baseband circuit 40 captures a plurality of first sub-baseband signals from the first radio frequency receive circuit 31, the satellite communication baseband circuit 40 may track the plurality of first sub-baseband signals. If the satellite communication baseband circuit 40 does not capture a plurality of first sub-baseband signals from the first radio frequency receive circuit 31, the satellite communication baseband circuit 40 may re-capture a plurality of first sub-baseband signals.

In a process of tracking the plurality of first sub-baseband signals, the satellite communication baseband circuit 40 may further determine whether to stably track the plurality of first sub-baseband signals. If the plurality of first sub-baseband signals are stably tracked, quality evaluation may be performed on the plurality of first sub-baseband signals, and a carrier-to-noise ratio difference between the first sub-baseband signals output by different receivers is obtained through comparison. Based on the carrier-to-noise ratio difference between the first sub-baseband signals output by the different receivers, and a preset weight calculation formula, weights of the first sub-baseband signals output by each receiver are calculated. In addition, based on the respective weights, the plurality of first sub-baseband signals corresponding to the same satellite are combined into a combined baseband signal.

For example, carrier-to-noise ratios of the two first sub-baseband signals output by the 1^{st} receiver are compared with carrier-to-noise ratios of the two second sub-baseband signals output by the 2^{nd} receiver. If the carrier-to-noise ratios of the two first sub-baseband signals output by the 1^{st} receiver are the same as the carrier-to-noise ratios of the two second sub-baseband signals output by the 2^{nd} receiver, weights of the first sub-baseband signals output by the two receivers are the same. If a difference between the carrier-to-noise ratios of the two first sub-baseband signals output by the 1^{st} receiver and the carrier-to-noise ratios of the two second sub-baseband signals output by the 2^{nd} receiver is greater than 10 dB, a weight ratio of the two first sub-baseband signals output by the 1^{st} receiver to the two second sub-baseband signals output by the 2^{nd} receiver may be 9:1.

The preset weight calculation formula is not limited in this embodiment of this application. The preset weight calculation formula is related to carrier-to-noise ratios of the plurality of first sub-baseband signals, the carrier-to-noise ratio difference between the plurality of first sub-baseband signals, and an actual satellite communication requirement.

For example, a weight ratio of the two first sub-baseband signals output by the 1^{st} receiver to the two second sub-baseband signals output by the 2^{nd} receiver is 9:1. The first sub-baseband signal that is output by the 1^{st} receiver and that corresponds to the satellite A and the second sub-baseband signal that is output by the 2^{nd} receiver and that corresponds to the satellite A are combined into a combined baseband signal at a ratio of 9:1. The first sub-baseband signal that is output by the 1^{st} receiver and that corresponds to the satellite B and the second sub-baseband signal that is output by the 2^{nd} receiver and that corresponds to the satellite B are combined into a combined baseband signal at a ratio of 9:1.

It should be noted herein that, different from the related technology 2 mentioned above that the radio frequency signal received by one of the plurality of antennas 10 is selected for satellite communication, in this embodiment of this application, a plurality of radio frequency signals received by the plurality of antennas 10 are simultaneously used, and the plurality of radio frequency signals are combined for processing, so that the signals received by the plurality of antennas 10 can be fully used for signal enhancement. This may avoid that satellite communication cannot be ensured in a scenario in which the radio frequency signals received by all the antennas 10 are poor. Compared with the related technology 2, this solution may stably obtain a higher carrier-to-noise ratio gain. For example, where there are two antennas 10, a carrier-to-noise ratio gain of 2 dB to 3 dB may be obtained stably compared with the related technology 2.

In some possible implementations, that the satellite communication baseband circuit 40 performs quality evaluation on the plurality of first sub-baseband signals may be understood as follows: The carrier-to-noise ratios of the plurality of first sub-baseband signals are evaluated.

Then, the satellite communication baseband circuit 40 may further continue to transmit the combined baseband signal, so that the baseband signal for satellite communication may be stably tracked.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A terminal device, comprising a plurality of receivers, wherein each receiver comprises an antenna, a first radio frequency front-end circuit, a second radio frequency front-end circuit, and a first radio frequency receive circuit; and the terminal device further comprises a satellite communication baseband circuit and a wireless communication baseband circuit, wherein
the first radio frequency receive circuit is configured to: receive a first radio frequency signal sent by the antenna through the first radio frequency front-end circuit, process the first radio frequency signal into a first baseband signal, and send the first baseband signal to the same satellite communication baseband circuit; or
the first radio frequency receive circuit is configured to: receive a second radio frequency signal sent by the antenna through the second radio frequency front-end circuit, process the second radio frequency signal into a second baseband signal, and send the second baseband signal to the same wireless communication baseband circuit.

2. The terminal device according to claim 1, wherein the terminal device further comprises a first selector switch and a second selector switch;
the antenna is electrically connected to the first radio frequency front-end circuit or the second radio frequency front-end circuit through the first selector switch; and
the first radio frequency receive circuit is electrically connected to the satellite communication baseband circuit or the wireless communication baseband circuit through the second selector switch.

3. The terminal device according to claim 1, wherein the receiver further comprises a second radio frequency receive circuit; and
when the first radio frequency receive circuit receives the first radio frequency signal, the second radio frequency receive circuit is configured to: receive the second radio frequency signal sent by the second radio frequency front-end circuit, process the second radio frequency signal into the second baseband signal, and send the second baseband signal to the same wireless communication baseband circuit; or
when the first radio frequency receive circuit receives the second radio frequency signal, the second radio frequency receive circuit is configured to: receive the first radio frequency signal sent by the first radio frequency front-end circuit, process the first radio frequency signal into the first baseband signal, and send the first baseband signal to the same satellite communication baseband circuit.

4. The terminal device according to claim 3, wherein the wireless communication baseband circuit comprises a first wireless communication baseband circuit and a second wireless communication baseband circuit, and the terminal device further comprises a plurality of selection circuits;
the selection circuit is electrically connected between each of the first radio frequency receive circuit and the second radio frequency receive circuit of each receiver and all of the satellite communication baseband circuit, the first wireless communication baseband circuit, and the second wireless communication baseband circuit;
the first radio frequency receive circuit or the second radio frequency receive circuit is further configured to: process the second radio frequency signal into the second baseband signal or a third baseband signal when receiving the second radio frequency signal; and
the selection circuit is configured to: receive the first baseband signal and the second baseband signal, or the first baseband signal and the third baseband signal, or the second baseband signal and the third baseband signal that are sent by the first radio frequency receive circuit and the second radio frequency receive circuit; and send the first baseband signal to the same satellite communication baseband circuit and send the second baseband signal to the same first wireless communication baseband circuit, or send the first baseband signal to the same satellite communication baseband circuit and send the third baseband signal to the same second wireless communication baseband circuit, or send the second baseband signal to the same first wireless communication baseband circuit and send the third baseband signal to the same second wireless communication baseband circuit.

5. The terminal device according to claim 3 or 4, wherein the terminal device further comprises a combiner, and the antenna is electrically connected to the first radio frequency front-end circuit and the second radio frequency front-end circuit; and
the first radio frequency front-end circuit and the second radio frequency front-end circuit are electrically connected to the first radio frequency receive circuit and the second radio frequency receive circuit through the combiner.

6. The terminal device according to any one of claims 1 to 4, wherein the wireless communication baseband circuit comprises at least one of a Wi-Fi baseband circuit, a Bluetooth baseband circuit, and a cellular baseband circuit.

7. The terminal device according to claim 1 or 2, wherein the satellite communication baseband circuit comprises a delay error calculation circuit, and the terminal device further comprises a signal synchronization circuit, wherein
the delay error calculation circuit is configured to: calculate a delay error between a plurality of received first baseband signals, and send the delay error to the signal synchronization circuit; and
the signal synchronization circuit is configured to perform synchronous calibration on the first radio frequency receive circuit based on the delay error.

8. The terminal device according to claim 7, wherein that the delay error calculation circuit is configured to calculate a delay error between a plurality of received first baseband signals comprises:
the delay error calculation circuit is configured to receive a plurality of first baseband signals sent by a plurality of first radio frequency receive circuits; and
the delay error calculation circuit is further configured to: use the first baseband signal sent by one of the first radio frequency receive circuits as a reference baseband signal, calculate a delay error between another first baseband signal and the reference baseband signal based on a cross-correlation fitting algorithm, and send the delay error to the signal synchronization circuit; and
that the signal synchronization circuit is configured to perform synchronous calibration on the first radio frequency receive circuit in response to the delay error comprises:
the signal synchronization circuit is configured to perform, based on the delay error, compensation on a first radio frequency receive circuit other than the first radio frequency receive circuit transmitting the reference baseband signal.

9. The terminal device according to claim 7 or 8, wherein the first radio frequency receive circuit comprises a frequency mixer and an analog-to-digital conversion circuit that is electrically connected between the frequency mixer and the satellite communication baseband circuit; and
the signal synchronization circuit is electrically connected to the frequency mixer or the analog-to-digital conversion circuit.

10. The terminal device according to any one of claims 1 to 4, wherein the first baseband signal comprises a plurality of first sub-baseband signals received from a plurality of satellites;
the satellite communication baseband circuit is configured to: determine carrier-to-noise ratios of the plurality of received first sub-baseband signals; obtain, through comparison, a carrier-to-noise ratio difference between the first sub-baseband signals output by different receivers; determine, based on the carrier-to-noise ratio difference, weights of the first sub-baseband signals output by each receiver; and combine, based on the weights, the first sub-baseband signals corresponding to the same satellite into a combined baseband signal; and
the satellite communication baseband circuit is further configured to continue to transmit the combined baseband signal.

11. The terminal device according to any one of claims 1 to 4, wherein the first radio frequency receive circuit, the satellite communication baseband circuit, and the wireless communication baseband circuit are all integrated on a same chip.

12. The terminal device according to claim 11, wherein the first radio frequency front-end circuit, the second radio frequency front-end circuit, the first radio frequency receive circuit, the satellite communication baseband circuit, and the wireless communication baseband circuit are all integrated on a same chip.
